# DEMANDE DE BREVET EUROPEEN

(11) **EP 1 480 026 A1**
(43) Date de publication de la demande: **24.11.2004**
(21) Numéro de dépôt: 03405363.7
(22) Date de dépôt: 22.05.2003
(51) Int. Cl.: G01J 3/50, G01D 7/12

(54) **Dispositif de reconnaissance des couleurs**

(71) Demandeur: Ecole d'Ingenieurs du Canton de Neuchatel, 2400 Le Locle (CH)
(72) Inventeur: Maurer, David, 2000 Neuchâtel (CH)
(74) Mandataire: Gresset, Jean

(57) **Abrégé**

L'invention concerne un dispositif de reconnaissance de la couleur d'un objet (10), comportant :
- une source de lumière blanche (13) pour éclairer l'objet,
- des moyens de détection (15, 16, 17, 19) pour percevoir les composantes rouge, verte et bleue de la lumière réfléchie par l'objet et délivrer trois signaux quantifiés chacun sur une échelle numérique découpée en une pluralité de plages et représentatifs de l'intensité de ces composantes,
- une mémoire électronique (21) contenant une table de correspondance qui associe une couleur à différentes combinaisons possibles de ces signaux,
- un micro-contrôleur (18) programmé pour identifier dans la table de correspondance la couleur à laquelle correspondent les signaux reçus, et
- des moyens audio (20, 22) pour prononcer le nom de cette couleur.

## Description

La présente invention se rapporte au domaine des détecteurs optiques. Elle concerne, plus particulièrement, un dispositif de reconnaissance des couleurs, dont les aveugles et les malvoyants ont spécialement besoin.

En effet, certaines situations de la vie courante sont particulièrement difficiles pour cette tranche de la population en quête d'autonomie. Par exemple, lorsque ces personnes font leur courses, elles doivent demander de l'assistance pour choisir entre différentes variétés de pommes ou de poivrons. Par ailleurs, elles sont généralement soucieuses de surmonter leur handicap en donnant une bonne image d'elles-mêmes, y compris au niveau de leur habillement. Ainsi, lorsqu'elles veulent associer des vêtements de différentes couleurs, elles perdent de leur indépendance et doivent demander de l'aide.

Il existe déjà des appareils qui remplissent cette fonction. Ils utilisent, pour la plupart, le principe selon lequel tout objet absorbe, en fonction de sa couleur, une partie des ondes de la lumière qui l'éclaire et réfléchit le reste. De manière connue, si la lumière incidente couvre toutes les longueurs d'onde du domaine visible, alors le spectre de la lumière réfléchie est caractéristique de la couleur de l'objet.

A titre d'exemple, le document EP0114515 décrit un système comportant une mémoire dans laquelle les différentes couleurs sont enregistrées sous la forme d'un code binaire. Les composantes rouge, verte et bleue de la lumière réfléchie par l'objet examiné sont quantifiées afin de permettre à un système programmable d'établir la correspondance entre ces composantes et les codes contenus dans la mémoire.

L'inconvénient d'un tel dispositif est l'utilisation du codage binaire intermédiaire qui complique sa programmation. De plus, il nécessite un double étalonnage en référence à une surface blanche et à une surface noire.

La présente invention a pour but de proposer un dispositif peu coûteux, permettant de reconnaître les couleurs de manière particulièrement simple et sûre.

De façon plus précise, l'invention concerne un dispositif de reconnaissance de la couleur d'un objet, qui comporte :
- une source de lumière blanche pour éclairer l'objet,
- des moyens de détection pour percevoir les composantes rouge, verte et bleue de la lumière réfléchie par l'objet et délivrer trois signaux quantifiés chacun sur une échelle numérique découpée en une pluralité de plages et représentatifs de l'intensité desdites composantes,
- une mémoire électronique contenant une table de correspondance qui associe une couleur à différentes combinaisons possibles de ces signaux,
- un micro-contrôleur programmé pour :
   ■ identifier dans la table de correspondance les plages à l'intérieur desquelles se trouvent les valeurs des trois signaux ,
   ■ rechercher à quelle couleur enregistrée correspond la combinaison des trois plages identifiées, puis
   ■ fournir un signal représentatif de cette couleur, et
- des moyens audio répondant à ce signal par la prononciation du nom de la couleur.

De façon avantageuse, les moyens de détection comprennent :
- trois photodiodes munies chacune d'un filtre laissant passer seulement l'une des couleurs de base, rouge, verte et bleue, de manière à fournir trois signaux électriques représentatifs des composantes rouge, verte et bleue de la couleur de l'objet, et
- un convertisseur analogique numérique transformant lesdits signaux en une valeur numérique comprise dans ladite échelle.

Selon un mode de réalisation préféré le convertisseur, le micro-contrôleur, le circuit audio sont réunis en une seule puce électronique.

Les moyens de détection comprennent, en outre, des moyens d'amplification permettant de régler indépendamment l'amplitude des trois signaux appliqués au convertisseur analogique numérique.

Afin de compenser les effets de la non-homogénéité du spectre de la source de lumière et d'obtenir une meilleure résolution pour les couleurs sombres, le gain des moyens d'amplification est avantageusement ajusté de manière à ce que, en réponse à une surface de référence de couleur gris-clair, la valeur du signal de plus forte amplitude délivré par le convertisseur analogique numérique couvre la totalité de l'échelle et que les deux autres signaux soient amplifiés dans la même proportion.

Le dispositif selon l'invention présente encore les caractéristiques suivantes :
- le convertisseur analogique numérique est de type à 8 bits;
- l'échelle numérique utilisée est comprise entre 0 et 255;
- le source de lumière est une LED (de l'anglais Light Emitting Diode) blanche; et
- les trois photodiodes sont réparties autour de la source de lumière.

D'autres caractéristiques de l'invention apparaîtront plus clairement à la lecture de la description qui suit, faite en regard du dessin annexé, dans lequel :
- la figure 1 est un schéma de principe du dispositif, et
- la figure 2 montre une partie de la table de correspondance contenue dans sa mémoire.

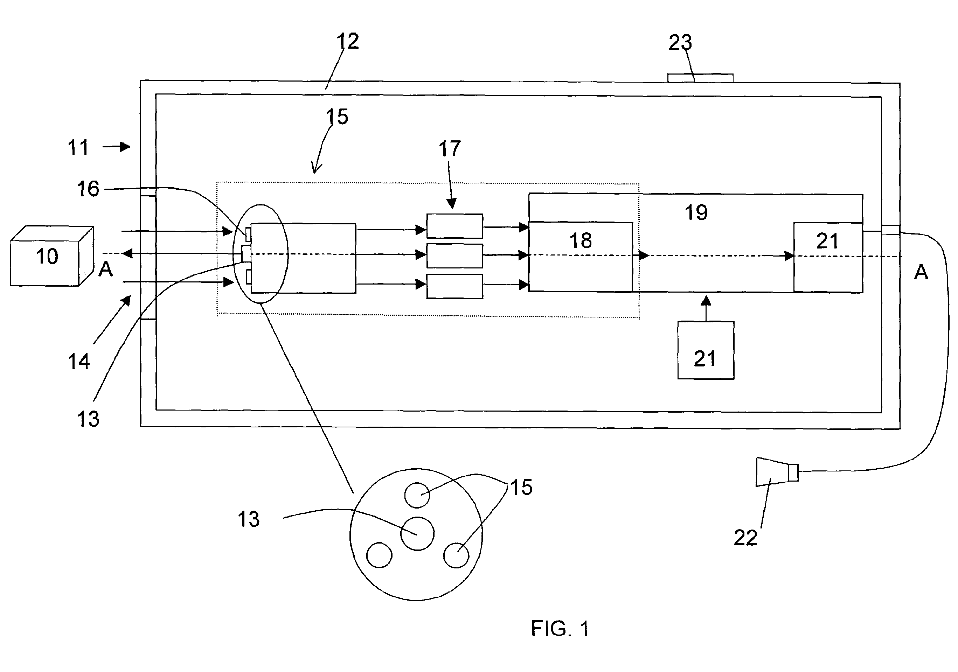

Sur la figure 1, on a représenté en 10 un objet à scanner pour en identifier la couleur au moyen d'un appareil 11 selon l'invention. Ses différents constituants sont alimentés par une source d'énergie quelconque (non représentée) et disposés dans un boîtier 12, avantageusement de forme parallélépipédique et d'axe AA, dont les dimensions sont, typiquement, de l'ordre de 120 mm de long et 30 mm de diagonale.

Une source de lumière blanche 13, disposée dans l'axe AA, est destinée à éclairer l'objet 10 à travers une ouverture 14 ménagée à une extrémité du boîtier 12. Avantageusement, la source 13 est une LED blanche, très bon marché et faible consommatrice d'énergie, par exemple, celle commercialisée sous la référence L5W54N par la firme Distrelec. Bien que le spectre d'une telle source ne couvre pas de manière homogène tout le visible, il sera expliqué plus loin comment cet inconvénient est surmonté.

Une partie de la lumière émise par la source 13 est absorbée par l'objet 10 disposé sur l'axe AA. La lumière réfléchie est perçue par un ensemble de détection. 15 comportant trois photodiodes 16 en silicium respectivement munies d'un filtre rouge, vert et bleu et réparties autour de la source.

Les trois photodiodes 16 délivrent ainsi trois signaux électriques dont la tension est représentative de l'intensité des composantes rouge, verte et bleue (ci-après {R, V, B}) de la couleur de l'objet 10. Ces photodiodes 16 sont couplées à un amplificateur 17 multi-étages permettant de régler indépendamment le gain pour chacune des trois couleurs, comme cela sera expliqué plus loin.

Les signaux électriques fournis par l'ensemble de détection 15 sont acheminés à un convertisseur analogique numérique 18 (CAN ci-après), avantageusement du type à 8 bits, qui sert à convertir la tension des trois signaux entrants en une valeur numérique comprise entre 0 et 255, fournissant donc un triplet de valeurs {R, V, B}.

Le CAN 18 est suivi d'un micro-contrôleur 19 dont la programmation sera décrite plus bas, associé à une mémoire électronique 20 et pilotant un circuit audio 21 qui permet de fournir le résultat de l'analyse de couleur sous forme sonore par l'intermédiaire d'un écouteur ou d'une oreillette 22.

De manière avantageuse, le CAN 18, le micro-contrôleur 19 et le circuit audio 21 sont réunis en une seule puce électronique telle que celle commercialisée par la firme Cygnal sous la référence C8051 F020.

Un bouton de commande extérieur 23 sert à déclencher les opérations de reconnaissance des couleurs.

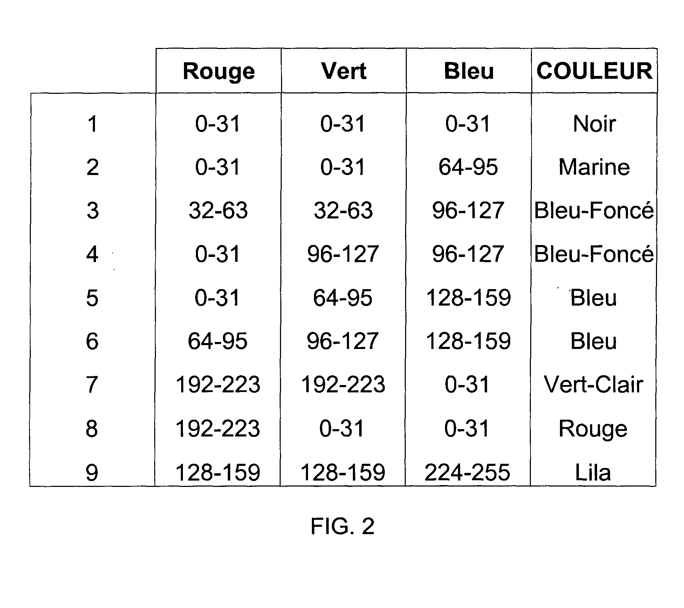

La mémoire 20 contient une table de correspondance, partiellement illustrée sur la figure 2, qui associe une couleur à toutes les combinaisons possibles de signaux numériques {R, V, B}.

Pour réaliser cette table, il est avantageusement fait usage d'un programme disponible sur Internet à l'adresse http://b.kostrzewa.free.fr/java/tf-applets/rvb.html ou à partir des palettes de couleurs proposées dans la plupart des logiciels de traitement d'images.

L'oeil humain n'étant toutefois pas capable de différencier toutes les combinaisons {R, V, B} et afin de réduire le volume de la mémoire 20 nécessaire pour stocker toutes les possibilités, les trois échelles sont découpées chacune en un nombre réduit de plages, typiquement en huit plages d'amplitude de 32 unités. Bien entendu, le nombre de plages utilisé détermine la résolution de l'appareil.

Ainsi est établi, dans la table de la mémoire 20, une correspondance directe entre les valeurs fournies par le CAN 18 traduisant la couleur de l'objet perçu 10, et le codage des couleurs {R, V, B} enregistré dans la mémoire 20.

Cependant, lorsque l'on veut identifier la couleur d'un objet, il faut déjà s'affranchir de quelques imperfections du dispositif inhérentes aux caractéristiques physiques des composants employés. Il s'agit, notamment, de corriger les effets de la non-homogénéité du spectre de la source de lumière 13 déjà évoquée ci-dessus, ou encore des différences de sensibilité des photodiodes selon les couleurs filtrées, qui, à intensité égale, donnent une réponse plus grande pour les longueurs d'onde correspondant au rouge.

De plus, l'expérience montre qu'entre un objet blanc et un objet gris clair, c'est à dire présentant un faible écart de teinte par rapport au blanc, un important saut de tension des signaux électriques et donc des valeurs {R, V, B} est observé. Typiquement, le saut de tension entre le gris-clair et le blanc représente 40% environ de l'écart entre le noir et le blanc. L'échelle disponible pour définir toutes les autres couleurs est donc considérablement amputée, ce qui altère la résolution de l'appareil, particulièrement pour les couleurs sombres.

Pour contourner ces problèmes, le calibrage du dispositif selon l'invention est réalisé en usine sur une surface gris-clair. Lors de cette opération, l'étage de l'amplificateur 17 lié à celui des trois signaux provenant des détecteurs 16 qui a l'amplitude la plus élevée est réglé de manière à ce que la valeur numérique fournie à la sortie du CAN 18 soit au maximum de l'échelle, soit 255. Les deux autres signaux sont ensuite amplifiés dans la même proportion. La totalité de l'échelle comprise entre 0 et 255 est ainsi disponible pour mesurer toutes les teintes plus sombres que cette référence. Par contre, il est évident que les nuances plus claires, comprises entre la référence et le blanc sont moins bien distinguées.

Plus généralement, il est possible, selon la couleur utilisée pour calibrer le dispositif, de moduler sa résolution, en choisissant, soit de privilégier une bonne résolution dans les sombres au détriment des nuances claires, soit de préférer une résolution moyenne sur tout le spectre des couleurs.

En fonctionnement, lorsque l'on veut identifier la couleur d'un objet 10, l'appareil 11 ayant été calibré une fois pour toute en usine, par exemple avec une référence gris clair, on approche l'ouverture 14 de l'objet et déclenche la mesure grâce au bouton de commande 23. La LED blanche 13 éclaire momentanément l'objet et la lumière réfléchie est perçue par les trois photodiodes 16 qui fournissent des signaux électriques représentatifs des composantes {R, V, B} de la couleur de l'objet 10. Ces signaux sont convertis par le CAN 18 en un triplet de valeurs {R, V, B} comprises entre 0 et 255.

Le micro-contrôleur 19 qui reçoit ce triplet est programmé, selon tout algorithme connu de l'homme de métier, pour :
- identifier, dans les trois colonnes de la table de correspondance enregistrée dans la mémoire 20, les plages à l'intérieur desquelles se trouvent les valeurs du triplet (R, V, B) fournies par le CAN 18,
- rechercher à quelle couleur enregistrée correspond la combinaison des trois plages (R, V, B) retenues, puis finalement
- fournir au circuit audio 21 un signal permettant à celui-ci de faire prononcer par l'écouteur 22 le nom de la couleur identifiée.

L'utilisateur connaît alors la couleur de l'objet sur lequel il a pointé l'appareil.

Ainsi est proposé un dispositif de reconnaissance des couleurs particulièrement efficace car le codage de couleur est défini par l'oeil humain et pas seulement par un procédé numérique. Il permet, de plus, de moduler la résolution de l'appareil en fonction de la zone de couleurs dont on veut privilégier la reconnaissance.

## Revendications

1. Dispositif de reconnaissance de la couleur d'un objet, **caractérisé en ce qu'**il comporte :
- une source de lumière blanche (13) pour éclairer l'objet,
- des moyens de détection (15, 16, 17, 18) pour percevoir les composantes rouge, verte et bleue de la lumière réfléchie par ledit objet et délivrer trois signaux quantifiés chacun sur une échelle numérique découpée en une pluralité de plages et représentatifs de l'intensité desdites composantes,
- une mémoire électronique (20) contenant une table de correspondance qui associe une couleur à différentes combinaisons possibles desdits signaux,
- un micro-contrôleur (19) programmé pour :
■ identifier dans ladite table de correspondance les plages à l'intérieur desquelles se trouvent les valeurs desdits signaux,
■ rechercher à quelle couleur enregistrée correspond la combinaison des trois plages identifiées, puis
■ fournir un signal représentatif de ladite couleur, et
- des moyens audio (21, 22) répondant à ce signal par la prononciation du nom de cette couleur.

2. Dispositif selon la revendication 1, **caractérisé en ce que** lesdits moyens de détection comprennent :
- trois photodiodes (16) munies chacune d'un filtre laissant passer seulement l'une des couleurs de base, rouge, verte et bleue, de manière à fournir trois signaux électriques représentatifs des composantes rouge, verte et bleue de la couleur de l'objet, et
- un convertisseur analogique numérique (18) transformant lesdits signaux électriques en une valeur numérique comprise dans ladite échelle.

3. Dispositif selon la revendication 2, **caractérisé en ce que** ledit convertisseur (18), ledit micro-contrôleur (19) et ledit circuit audio (21) sont réunis en une seule puce électronique.

4. Dispositif selon l'une des revendications 2 et 3, **caractérisé en ce que** lesdits moyens de détection comprennent, en outre, des moyens d'amplification (17) permettant de régler indépendamment l'amplitude des trois signaux appliqués au convertisseur analogique numérique (18).

5. Dispositif selon la revendication 4, **caractérisé en ce que** le gain desdits moyens d'amplification (17) est ajusté de manière à ce que, en réponse à une surface de référence de couleur claire, la valeur du signal de plus forte amplitude délivré par le convertisseur analogique numérique (18) couvre la totalité de ladite échelle et que les deux autres signaux soient amplifiés dans la même proportion.

6. Dispositif selon l'une des revendications 2 à 5, **caractérisé en ce que** le convertisseur analogique numérique (18) est de type à 8 bits et **en ce que** ladite échelle est comprise entre 0 et 255.

7. Dispositif selon l'une des revendications 1 à 6, **caractérisé en ce que** ladite source de lumière (13) est une LED blanche.

8. Dispositif selon la revendication 5, **caractérisé en ce que** ladite surface de référence est de couleur gris-clair.

9. Dispositif selon l'une des revendications 2 à 8, **caractérisé en ce que** les trois photodiodes (16) sont réparties autour de la source de lumière (13).
